# EUROPEAN PATENT SPECIFICATION

(11) **EP 2 369 939 B1**
(45) Date of publication and mention of the grant of the patent: **18.02.2015**
(21) Application number: 09803741.9
(22) Date of filing: 03.12.2009
(51) Int. Cl.: A23D 9/007, A23L 1/30, A23D 7/005, A23G 1/00, A23G 1/46, A23G 9/42, A23G 1/48

(54) **FOOD PRODUCTS ENRICHED WITH METHYLXANTHINES**
MIT METHYLXANTHINEN ANGEREICHERTE LEBENSMITTELPRODUKTE
Produits alimentaires enrichis de méthylxanthines

(30) Priority: 29.12.2008 EP 08172988
(43) Date of publication of application: 05.10.2011
(73) Proprietor: Unilever PLC, Blackfriars London Greater London EC4Y 0DY (GB); Unilever N.V., 3013 AL Rotterdam (NL)
(72) Inventor: BERRY, Mark, John, Bedford Bedfordshire MK44 1LQ (GB); FARR, Robert, Stanley, Bedford MK44 1LQ (GB); GANZEVLES, Renate, Antonia, 2583 DB Den Haag (NL); GRAAF DE, Young, Martin, NL-3133 AT Vlaardingen (NL); VELIKOV, Krassimir, Petkov, NL-3133 AT Vlaardingen (NL)
(74) Representative: Warner, Guy Jonathan
(86) International application number: PCT/EP2009/066294
(87) International publication number: WO 2010/076112

(56) References cited:
- EP-A1- 1 856 988
- EP-A1- 2 022 344
- EP-A2- 0 416 718
- WO-A2-01/11988
- WO-A2-2004/082609
- US-A1- 2001 008 891
- DATABASE WPI Week 199209 Thomson Scientific, London, GB; AN 1992-070811 XP002585971 & SU 1 637 740 A1 (FOOD CONCENTRATE RE) 30 March 1991 (1991-03-30)
- HAYASHI N ET AL: "Binding energy of tea catechin/caffeine complexes in water evaluated by titration experiments with <1>H-NMR." BIOSCIENCE, BIOTECHNOLOGY, AND BIOCHEMISTRY 68 (12) 2512-2518 NAT. INST. OF VEG. & TEA SCI.,, vol. 68, no. 12, 2004, pages 2512-2518, XP002539424
- DREWNOWSKI A: "The science and complexity of bitter taste." NUTRITION REVIEWS JUN 2001, vol. 59, no. 6, June 2001 (2001-06), pages 163-169, XP009120025 ISSN: 0029-6643
- SMITH H J ET AL: "Methylxanthines are the psycho-pharmacologically active constitutes of chocolate" PSYCHOPHARMACOLOGY, SPRINGER VERLAG, BERLIN, DE, no. 176, 9 January 2004 (2004-01-09), pages 412-419, XP002516347 ISSN: 0033-3158
- PELEG H ET AL: "Bitterness and astringency of flavan-3-ol monomers, dimers and trimers" JOURNAL OF THE SCIENCE OF FOOD AND AGRICULTURE, WILEY & SONS, CHICHESTER, GB, vol. 79, no. 8, 1 January 1999 (1999-01-01), pages 1123-1128, XP002152495 ISSN: 0022-5142
- HENRY J P ET AL: "REDUCTION OF CHRONIC PSYCHO SOCIAL HYPERTENSION IN MICE BY DE CAFFEINATED TEA" HYPERTENSION, LIPPINCOTT WILLIAMS & WILKINS, US, vol. 6, no. 3, 1 January 1984 (1984-01-01) , pages 437-444, XP008070029 ISSN: 0194-911X

## Description

The present invention relates to food products that have been enriched with one or more methylxanthines such as theobromine and/or caffeine wherein the food product is a cereal bar, chocolate bar, cookie, condiment, confectionery, desert, snack, spread, ice cream, dressing, mayonnaise, sauce, bakery product, shortening or cheese. The present invention also relates to methods for the production of such food products and their uses.

Xanthines belong to the group of the alkaloids. Derivatives of xanthines are commonly used for their effects as mild stimulants and as bronchodilators, notably in treating the symptoms of asthma. Methylated xanthine derivatives (methylxanthines) include caffeine, paraxanthine, theophylline, theobromine and isocaffeine. These compounds are known to affect the mood when ingested, and additionally have other beneficial effects like improved brain function, higher alertness, and appetite suppression. Therefore there is a desire to enrich food products with methylxanthines, in order to achieve the beneficial effects of these compounds when consumed as ingredient of a food product.

Caffeine is a well-known constituent of food products like tea and coffee, and also chocolate. Theobromine naturally occurs in cocoa (at a level of about 2% by weight), and is also present in chocolate, especially dark chocolate. Theophylline is naturally found in tea, in small quantities. The typical caffeine level of some food products per unit amount serving ranges from about 8 mg in milk chocolate, up to about 150 mg in a cup of coffee. The theobromine amount per unit amount serving of chocolate ranges from about 60 to 180 mg. In general theobromine and caffeine levels vary widely in the various natural sources of these compounds.

When food products are enriched with methylxanthines in order to exhibit the positive effects of these compounds by consuming these foods, these compounds may increase the bitterness of the food product, which is for many consumers not favourable. Caffeine and theobromine are compounds that are known for their bitterness. Therefore many companies and institutions are working on the development of foods containing bitter compounds like the methylxanthines, without having the bitter taste profile.

EP 416 718 A1 discloses food compositions comprising tannin as a taste improver, for example for reduction of bitterness of coffee. Several sources of tannin have been disclosed. The concentration of tannin to be applied in some food products is the following: Coffee: 0.01 to 0.2 wt% based on the weight of the coffee. Tannin may be added in any manner. Tea (green tea, black tea, and others): 0.004 to 1 wt% based on the weight of the tea. Cocoa: 0.001 to 1 wt% based on the weight of the cocoa. Chocolate: 0.01 to 1 wt% based on the weight of the chocolate. Tannin may be added to chocolate at the same time with other materials such as cacao mass, sugar, cocoa butter and butter oil. When tannin is added to these food products in lower amounts than indicated, no effect on bitterness is observed. When tannin is added in higher amounts than indicated, the astringency of tannin per se becomes noticeable.

GB 758,712 discloses that coffee beans can be treated by addition of tannin, to precipitate the excess of caffeine into tannate of caffeine and so neutralize the effects of the caffeine after brewing coffee.

US 4,315,036 discloses a process for decaffeinating a tea extract which contains caffeine and tannins capable of complexing with caffeine comprising: (a) cooling said extract sufficiently to form (i) an aqueous soluble phase containing cold-water soluble components of the cooled extract, including a portion of the caffeine, and (ii) an insoluble phase containing a cold-water-insoluble complex of tannins with another portion of the caffeine; (b) separating the soluble phase from the insoluble phase; (c) treating the insoluble phase to remove caffeine therefrom; (d) adding decaffeinated tannins to the soluble phase; and (e) repeating steps (a) through (d) until the desired degree of decaffeination has been achieved.

EP 1 856 988 A1 discloses certain flavonoid addition products (e.g. a flavonoid that is C-glycosylated with a reducing sugar) that can mask bitter and astringent taste notes. These compounds could be used in food products. One of the examples shows that the bitterness intensity of theobromine (600 ppm) combined with about 10 ppm 8-C-glucosylated catechin is not decreased, but a delay in bitterness perception compared to pure theobromine was perceived by tasters. In another example theobromine (at a concentration of 3 mmol per litre) was spiked with various compounds. Addition of (-)-catechin-8-C-beta-D-glucopyranoside (at concentrations of either 2.2, 22.2, or 222 micromol per litre) led to a less bitter, softer and more pleasant taste. The addition of either (+)-catechin (at concentrations of either 2.2, 22.2, or 222 micromol per litre) or (+)--epicatechin (at concentrations of either 2.2, 22.2, or 222 micromol per litre) to theobromine did not lead to decrease of bitterness, but to a more cocoa-like bitterness. Catechin and epicatechin are monomeric polyphenolic compounds.
WO 01/11988 relates to the alteration and improvement of foods and drinks by addition of polymeric polyphenolic materials, which includes polymeric proanthocyanidins. In this context polymeric means that the compounds contain more than seven polyphenolic repeat units. The proanthocyanidin-based polymeric materials employed belong to the condensed tannins. The bitter taste of caffeine can be potentiated by addition of polyproanthocyanidins.

JP10004919 discloses foods and drinks which have a reduced bitterness and comprise catechins containing a proanthocyanidin polymer, caffeine and a cyclodextrin such as β-cyclodextrin. The proanthocyanidin polymer is produced during the fermentation of green tea leaves, and the catechins like epicatechin, epigallocatechin, epicatechin gallate, and epigallocatechin gallate form polymers. Caffeine is removed from an extract of green tea by adsorption of the caffeine on activated carbon.

Cyclodextrins have been disclosed as compounds that may decrease the bitterness of various food ingredients, for example Szejtli (Stärke 34, 1982, p. 379-385), JP 8-298930 A2, US 4,904,773, WO 2007/122251, WO 99/42111, Wei et al. (Spectrochimica Acta part A 59 (2003) 2697-2703), US 3,528,819, JP 2004 057153.

US 2001 / 0008891 discloses pharmaceutical compositions comprising a xanthine and a catechin which have platelet aggregation inhibitory activity. This document does not mention food products or bitterness.

The methods as applied in the prior art may not be sufficient to decrease the bitterness of food products that have been enriched with methylxanthines such as theobromine and/or caffeine. Accordingly it is an object of the present invention to provide a food product containing an effective amount of one or more methylxanthines, and that does not have the negative taste attributes of these compounds, notably the bitterness. In order to achieve the positive effects of methylxanthines such as caffeine and/or theobromine, the food products need to be enriched with the methylxanthines. Another object of the present invention is to provide a food product that improves the mood of the consumer during and after consumption.

We have now found that these objects can be achieved by the preparation of one or more complexes of methylxanthines with complexing agents, wherein the complexing agent comprises polymeric polyphenol compounds having a molecular weight equal to or above 500 gram per mole. The complexes with methylxanthines are prepared prior to mixing these complexes into the food products, thereby enriching the food product with one or more methylxanthines. These complexes do not taste bitter, and therefore food products can be prepared which have been enriched with the one or more methylxanthines, with no bitter taste, or at least a strongly reduced bitter taste, as compared to food products comprising non-complexed methylxanthines. This leads to better tasting, more attractive food products, having the functional benefit of the methylxanthines. Moreover, the complexes not only reduce the bitterness arising from the methylxanthine, but also reduce any bitterness and / or astringency arising from the polymeric polyphenol.

Accordingly in a first aspect the invention provides a food product enriched with one or more methylxanthines, comprising a total amount of from 100 to 3000 milligram of methylxanthines per unit amount of the food product, further comprising a polymeric polyphenol compound that has a molecular weight equal to or above 500 gram per mole and which is complexed with the one or more methylxanthines, wherein the weight ratio of the polymeric polyphenol compound to the one or more methylxanthines is from 10:1 to 1:10 wherein the food product is a cereal bar, chocolate bar, cookie, condiment, confectionery, desert, snack, spread, ice cream, dressing, mayonnaise, sauce, bakery product, shortening or cheese.

In a second aspect the invention provides a method for enriching a food product with one or more methylxanthines, comprising the steps:
a) dissolving one or more methylxanthines in an aqueous medium
b) dissolving a polymeric polyphenol compound having a molecular weight equal to or above 500 gram per mole in an aqueous medium, at a pH between 2 and 7;
c) mixing the products from steps a and b, to form a precipitate;
d) adding the product from step c to a food product
wherein the food product is a cereal bar, chocolate bar, cookie, condiment, confectionery, desert, snack, spread, ice cream, dressing, mayonnaise, sauce, bakery product, shortening or cheese.

In a third aspect the invention provides the use of a food product according to the first aspect of the invention to improve the mood of the person consuming the food product.

### Detailed description

All percentages mentioned herein are by weight calculated on the total composition, unless specified otherwise. The abbreviation 'wt%' is to be understood as % by weight of the total composition.

In the context of the present invention, enrichment of food products with one or more methylxanthines means that the concentration of these compounds has been increased relatively to the methylxanthines naturally present in the food product. This enrichment can be done by addition of one or more methylxanthines. The addition may be done by one or more methylxanthines in a pure form, as a chemical compound. The source of the compounds may be synthetic, or it may be extracted or concentrated from a natural source. Another method for enrichment of a food product is by the addition of a composition that naturally comprises one or more methylxanthines, and that has been concentrated with respect to the methylxanthines by a processing step. An example of this is a coffee extract containing caffeine, which can be added to a cocoa drink, thus making a cocoa drink which has been enriched in caffeine. Such a concentrated composition may be added to any suitable food product, leading to enrichment of the food product with the methylxanthines.

Enrichment may result in a concentration of the enriched compound in a food product which is 5% or 10% higher than naturally found. It may also lead to a concentration which is twice or triple as high as found in nature, and it may even be higher than these concentrations.

### Methylxanthines

The food products according to the present invention are enriched with one or more methylxanthines, and comprise a total amount of from 100 to 3000 milligram of methylxanthines per unit amount of the food product. Preferably the methylxanthine is chosen from one or more of the group consisting of caffeine, theobromine, theophylline, paraxanthine, and isocaffeine. The molecular structures of some of the relevant compounds are the following.

*Caffeine* (C₈H₁₀N₄O₂, M_{W}= 194.19, synonym: 1,3,7-trimethylxanthine):

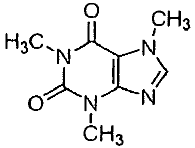

*Theobromine* (C₇H₈N₄O₂, M_{W} = 180.16, synonyms: 2,6-dihydroxy-3,7-dimethylpurine and 3,7-dimethylxanthine):

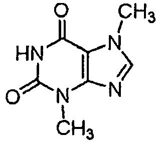

*Theophylline* (C₇H₈N₄O₂, M_{W} = 180.16, synonyms: 1,3-dimethylxanthine; 2,6-dihydroxy-1,3-dimethylpurine; and 3,7-dihydro-1,3-dimethyl-1H-purine-2,6-dione):

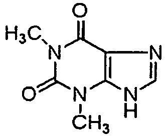

*Paraxanthine* (C₇H₈N₄O₂, M_{W} = 180.16, synonyms 1,7-dimethylxanthine; 1,7-dimethyl-1H-purine-2,6-dione; 2,6-dihydroxy-1,7-dimethylpurine)

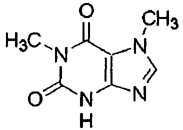

*Isocaffeine* (C₈H₁₀N₄O₂, M_{W} = 194.19, synonyms: 1,3,9-Trimethylxanthine; 2,6-Dihydroxy-1,3,9-trimethylpurine;

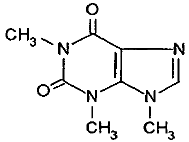

The term "methylxanthines" as used herein therefore includes but is not limited to the respective compounds 1-methylxanthine, 3-methylxanthine, 7-methylxanthine, and 9-methylxanthine. These compounds all have the structural formula C₆H₆N₄O₂, and M_{W} = 166.14:

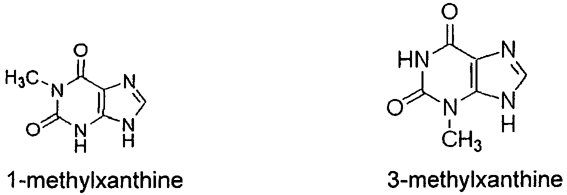

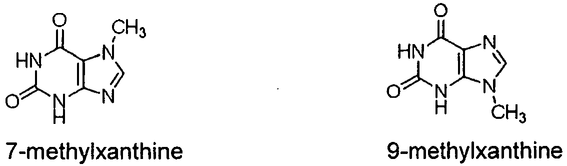

Typical caffeine contents of a selected range of food products are given in the following table 1.

**Table 1**

| **product** | **serving size** | **caffeine per serving (mg)** | **caffeine per litre (mg)** |
|---|---|---|---|
| **chocolate, dark** | **1 bar (43 g)** | **31-37** | **-** |
| **chocolate, milk** | **1 bar (43 g)** | **10** | **-** |
| **coffee, brewed** | **207 mL** | **80-175** | **386-652** |
| **coffee, decaffeinated** | **207 mL** | **2-5** | **10-24** |
| **coffee, espresso** | **44-60 mL** | **100** | **1691-2254** |
| **tea, leaf or bag** | **177 mL** | **50** | **281** |
| **tea, green** | **177 mL** | **30** | **169** |
| **soft drink, cola** | **355 mL** | **34** | **96** |
| **energy drinks** | **250 mL** | **78-83** | **310-330** |

Zoumas et al. reported the theobromine and caffeine content of chocolate products (Journal of Food Science, vol. 45, March 1980, p. 314-316). The amounts are indicated in the following table.

**Table 2**

| **product** | **theobromine content** | **theobromine amount per serving** | **caffeine content** | **caffeine amount per serving** |
|---|---|---|---|---|
| average of 22 samples of chocolate liquor | 1.22% | | 0.21% | |
| commercial cocoas (average) | 1.89% | | 0.21% | |
| sweet chocolate (average) | 0.46% | 180 mg per 40 g | 0.07% | 28 mg per 40 g |
| milk chocolate (average) | 0.15% | 60 mg per 40 g | 0.02% | 8 mg per 40 g |
| hot cocoa (chocolate) beverages (average) | | 65 mg per 147 mL | | 4 mg per 147 mL |
| chocolate milk (from a variety of cocoa-sugar mixes) | | 58 mg per 237 mL | | 5 mg per 237 mL |

Theobromine and caffeine levels varied widely in individual samples within the product categories examined. Also, the ratio of theobromine to caffeine varied widely among different chocolate liquors ranging from 2.5:1 to 23:1.

Craig et al. (Journal of Food Science, vol. 49, January 1984, p.302-303) reported also caffeine and theobromine levels in cocoa products. Mean theobromine and caffeine levels in cocoa beverages were 0.23 mg/g and 0.011 mg/g, respectively. Per serving of 150 mL this is about 34.5 mg and 1.65 mg theobromine and caffeine, respectively. In chocolate ice cream they reported theobromine and caffeine levels of 0.62 mg/g and 0.032 mg/g, respectively, i.e. 62 mg and 3.2 mg theobromine and caffeine, respectively per 100g.

Theophylline is naturally found in tea, although in trace quantities (∼1 mg/L).

The source of the methylxanthines of the present invention may be any natural or synthetic source. The methylxanthine added to the enriched food product could be a methylxanthine from a synthetic source, and therefore nearly in pure form. For example caffeine and theobromine can be bought in pure form. The methylxanthine may also originate from a natural source, for example a cocoa extract containing a relatively high concentration of methylxanthines like caffeine and theobromine. Any other source of the methylxanthines may be suitable as well.

### Polymeric polyphenol compounds

Without wishing to be bound to theory, by addition of a polymeric polyphenol compound having a molecular weight equal to or above 500 gram per mole, it is understood that a complex is formed with a methylxanthine, due to interaction between the methylxanthines such as caffeine and/or theobromine and the polymeric polyphenol compound. The use of polymeric polyphenols having a molecular weight of at least 500 gram per mole results in complexes which typically precipitate from solution.

As used herein, the term 'complex' refers to a non-covalent association of at least two molecules. Complexation can be detected by ¹H-NMR; the chemical shift of the polyphenol and/or methylxanthine changes due to complex formation. If the complex precipitates, the methylxanthine and polymeric polyphenol peaks may become undetectable by high-resolution ¹H-NMR. However, the precipitated complex can usually be dissociated by addition of a suitable solvent (e.g. the solvent dimethyl sulfoxide, DMSO) in which case the individual components again become visible to high-resolution ¹H-NMR.

The polymeric polyphenol compounds suitable in the present invention are defined as compounds containing multiple hydroxyl groups attached to aromatic groups and having a molecular weight equal to or above 500 gram per mole. In the context of the present invention, the term polymeric polyphenol compound comprises oligomeric and polymeric polyphenol compounds. Preferably the molecular weight of the polymeric polyphenol compound is above 700 gram per mole, more preferred above 1000 gram per mole, most preferred above 1500 gram per mole.

The term 'aromatic group' includes aromatic hydrocarbon groups and/or heterocyclic aromatic groups. Heterocyclic aromatic groups include those containing oxygen, nitrogen, or sulphur (such as those groups derived from furan, pyrazole or thiazole). Aromatic groups can be monocyclic (for example as in benzene), bicyclic (for example as in naphthalene), or polycyclic (for example as in anthracene). Monocyclic aromatic groups include five-membered rings (such as those derived from pyrrole) or six-membered rings (such as those derived from pyridine). The aromatic groups may comprise fused aromatic groups comprising rings that share their connecting bonds. The term polyphenol also includes glycosidic polyphenols and/or their derivatives (e.g. acids, esters, and/or ethers). Any combinations of the free and various esterified, etherified and glycosylated forms of polyphenols are also included.

The polyphenol may be of natural origin (e.g. from green tea, black tea, wine pomegranates, plums/prunes, cherries, berries or cocoa / chocolate), or of synthetic origin, or mixtures thereof. With the term polymeric polyphenol compounds we include as examples for application in the present invention: tannic acid, condensed tannins, hydrolysable tannins, lignins, flavonoids, proanthocyanidins (or leucoanthocyanidins), procyanidins, theaflavins, thearubigins, tea polyphenols (e.g. theasinensin, galloyl oolongtheanin, theaflavates and bistheaflavates), cocoa and wine polyphenols.

The following examples of compounds may conjugate to form molecules having a molecular weight equal to or larger than 500 gram per mole, and therefore may be suitable for use in the present invention. Polymers or oligomers of (mixtures of) dopamine, epinephrine (adrenaline), norepinephrine (noradrenaline), salbutamol, curcumin and/or its derivatives, rosmarinic acid and/or its derivatives, paradol and its derivatives, hydroxytyrosol, silymarin, coumarin and/or its derivatives, esculetin, scopoletin, lignans (including sesamol, sesamin, sesamolin or mixtures thereof), carnosol, oleuropein, ubiquinol, phenolphthalein, carthamin, polyporic acid, atromentin, bovichinon-3, grevillin A, grevillin B, grevillin D, alkannin, shikonin, alizarin, purpurin, pseudopurpurin, rubiadin, munjistin, chinizarin, morindon, emodin, aloe-emodin, chrysophanol, kermesic acid, carminic acid, ellagic acid, spinochrome, alkannin, hypericin, chrysophanic acid, betanidin, isobetanidin, caftaric acid, chlorogenic acid, syringic acid, gentisic acid, caffeic acid, hops acids (including humulone, lupulone, colupulone or mixtures thereof), magnolol, honokiol, biphenols, di-resorcinol sulphide, bithionol, bromochlorophen, dioxybenzone, bisoctrizole, bemotrizinol, flavones (such as apigenin, luteolin, baicalin), flavonols (such as quercetin, galantin, kaempferol, myricetin, fisetin, isorhamnetin, pachypodol, rhamnazin, rutin, hydroxyethylrutosides), flavanones (such as hesperetin, naringenin, eriodictyol), 3-hydroxyflavanones (such as dihydroquercetin, dihydrokaempferol), isoflavones (such as genistein, daidzein, glycitein), cyanidin, delphinidin, malvidin, pelargonidin, peonidin, petunidin, resveratrol, phenylpropanoids, anthocyanidins, anthocyanins, sanguiin, rhoipteleanin, psiguavin, jolkininin, yunnaneic acid, dehydrotheasinensin, theasinensin quinone, epitheaflagallin, hydroxytheaflavin, proepitheaflagallin, biflavonoids.

Synthetic polyphenols include linear (open chain) and cyclic polyphenols and oligomers (see for example, Handique JG, Baruah JB, 'Polyphenolic compounds: an overview', React. & Funct. Polym., 2002, 52(3), p. 163-188).

The term 'tannin' is widely applied to any large polyphenolic compound containing hydroxyl and other groups which form strong complexes with proteins and other macromolecules. Tannins have molecular weights ranging from 500 to over 3,000 gram per mole. Tannins degrade by action of alkalis, gelatin, heavy metals, iron, lime water, metallic salts, strong oxidizing agents and zinc sulphate. Tannins are astringent, bitter plant polyphenols that either bind and precipitate or shrink proteins. The astringency from the tannins is what causes the dry and puckery feeling in the mouth following the consumption of red wine, strong tea, or an unripe fruit.

Tannins can be separated into 2 different classes: hydrolysable tannins or condensed tannins, which both are within the scope of the present invention.

Hydrolysable tannic acids release gallic acid upon chemical or enzymatic hydrolysis. Examples of gallotannins are the gallic acid esters of glucose in tannic acid (C₇₆H₅₂O₄₆), found in the leaves and bark of many plant species. Tannic acid is a polyphenolic compound, which is abundantly present in nature, for example in the bark of Sequoia trees, where it protects these trees from wildfires. The chemical formula for commercial tannic acid is usually given as C₇₆H₅₂O₄₆, however usually tannic acid is a mixture of related compounds. Its structure is based mainly on glucose esters of gallic acid. Tannic acid is highly soluble in water. Gallic acid is 3,4,5-trihydroxybenzoic acid (C₆H₂(OH)₃COOH), found in for example tea leaves.

*Tannic* acid (C₇₆H₅₂O₄₆, M_{W} = 1701.20, synonyms: gallotannin, tannin)

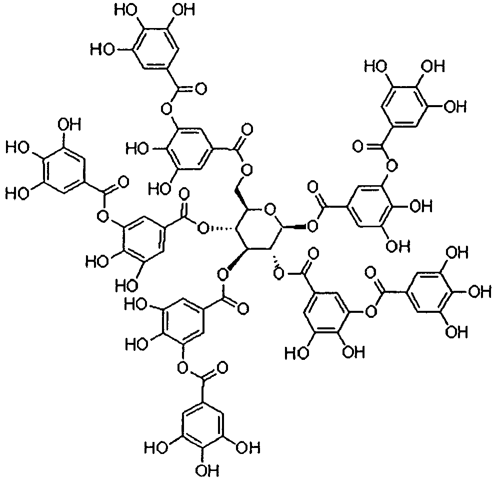

Tannic acid is an especially preferred polymeric polyphenol compound in the context of the present invention.

Without wishing to be bound by theory, it is understood that a methylxanthine can form a complex with the preferred polymeric polyphenol compound tannic acid, due to the stacking of a methylxanthine molecule with a gallic acid residue of the tannic acid. Stoichiometrically, one tannic acid molecule comprising 5 terminating gallic acid residues is able to complex 5 molecules of a methylxanthine. The binding occurs due to physical interactions.

Condensed tannins (or proanthocyanidins) are polymers of 2 to 50 (or more) flavanoid units that are joined by carbon-carbon bonds, which are not susceptible to being cleaved by hydrolysis. They have been shown to bind to proteins. For example, they bind to digestive enzymes resulting in a line of defence of plants against herbivores. While hydrolyzable tannins and most condensed tannins are water soluble, some very large condensed tannins are insoluble.

Proanthocyanidins having a molecular weight above 500 gram per mole occur in many sizes, and may be joined at various carbon atoms. Two examples of condensed tannins (proanthocyanidins) are:

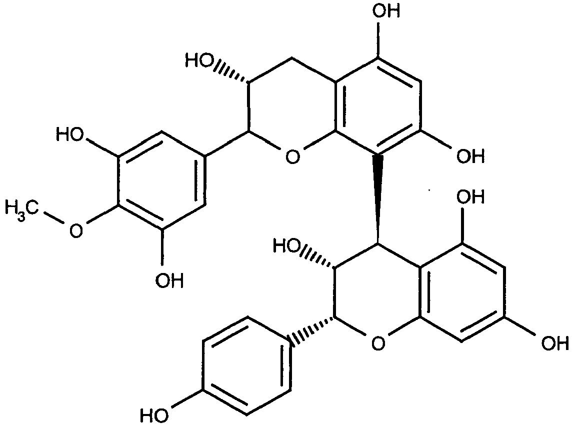

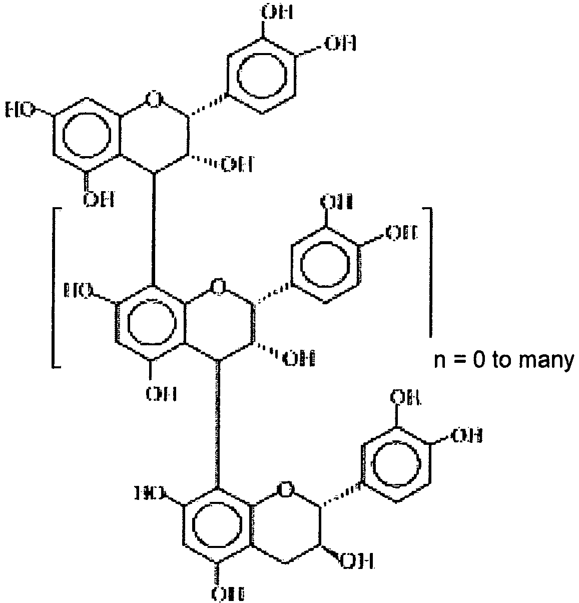

Also higher and more complicated oligomers and polymers are known.

The food products according to the invention comprise one or more methylxanthines and polymeric polyphenol compounds, wherein the weight ratio of the polymeric polyphenol compound to the one or more methylxanthines is from 10:1 to 1:10. Preferably the weight ratio is from 3:1 to 1:3 gram.

### Food products enriched with methylxanthines

The food products according to the present invention are enriched with one or more methylxanthines, and comprise a total amount of from 100 to 3000 milligram of methylxanthines per unit amount of the food product. Preferably the methylxanthine is chosen from one or more of the group consisting of caffeine, theobromine, theophylline, and paraxanthine. Preferably the food products according to the invention comprise at least 200 mg, more preferably at least 300 mg methylxanthines per unit amount of the food product.

Preferably the food product according to the invention comprises caffeine in an amount from 20 to 500 milligram per unit amount of the food product, more preferably comprises caffeine in an amount from 50 to 200 milligram, most preferably from 70 to 150 milligram per unit amount of the food product.

In another preferred embodiment the food product according to the invention, comprises theobromine in an amount from 80 to 2980 milligram per unit amount of the food product. More preferred the food product according to the invention comprises theobromine in an amount from 250 to 1200 milligram per unit amount of the food product, even more preferred in an amount of 300 to 1000 milligram, more preferably from 400 to 800 milligram, and mostly preferred from 600 to 800 milligram per unit amount of the food product.

These ranges as separately indicated for the preferred methylxanthines caffeine and theobromine may be combined in a single food product.

A preferred embodiment of the current invention is a food product that comprises caffeine in an amount from 20 to 500 milligram and theobromine in an amount from 80 to 2980 milligram per unit amount of the food product. More preferred a food product according to the present invention comprises from 30 to 300 milligram caffeine and from 200 to 1200 milligram theobromine per unit amount of the food product. Most preferred a food product according to the present invention comprises from 40 to 200 milligram caffeine and from 300 to 1000 milligram theobromine per unit amount of the food product.

The term "food product" means a substance that can be eaten or drunk for nutrition and/or pleasure. Food products typically contain one or more of carbohydrates, fats, proteins and water and are consumed in portions of at least 5 or 10g. The term "food product" therefore excludes e.g. pharmaceutical compositions.

A wide range of food products is suitable to be enriched with one or more methylxanthines. The present invention provides cereal bars, chocolate bars, cookies, condiments, confectionery, deserts, snacks, spreads like margarine or low fat margarines or dairy spreads, ice cream, dressing, mayonnaise, sauce, bakery products, shortenings or cheese. Preferred preferred food products are chocolate, ice cream, and especially ice cream comprising chocolate chunks or a chocolate coating. An especially preferred food product according to the invention comprises chocolate, and the chocolate has been enriched with one or more methylxanthines. As used herein the term 'chocolate' refers to an edible composition comprising at least 5% by dry weight of material derived from the cacao tree *(Theobroma cacao).* The chocolate preferably comprises at least 10% by dry weight of material derived from the cacao tree, more preferably from 30 to 95% by dry weight. The chocolate is preferably at least semi-solid, more preferably it is solid at 20°C. The chocolate is preferably fat-continuous. The chocolate may be dark chocolate, milk chocolate or white chocolate.

In a further preferred embodiment the food product is a spread such as water-in-oil emulsions, for example a margarine or low fat margarine type food product. A spread may also be an oil-in-water emulsion, like dairy spreads. Suitably the total triglyceride level of such a spread may range from about 10% by weight to 85% by weight of the composition, more preferred from 20% to 70% by weight, most preferred from 30% to 60% by weight of the composition.

A unit amount of a food product is a quantity of a food product which is usually consumed as a single serving. The unit amount or serving size of such food products depends on the specific product. A few non-limiting examples of typical serving sizes are:

| | |
|---|---|
| milk, yoghurt: | 200 mL |
| natural cheese: | 43 gram |
| processed cheese: | 57 gram |
| fruit juice: | 177 mL |

| | |
|---|---|
| soft drink: | 200 mL |
| bread: 1 slice, | 35 gram |
| coffee: | 125 mL |
| tea: | 150 mL |
| cereal or candy bar: | 50 gram |
| chocolate: | 30 gram |
| ice cream: | 100 mL |
| spread: | 15 gram |
| soup: | 250 mL |
| cocoa beverage: | 200 mL |

The food products preferably contain at least 50mg of methylxanthine per 100g of food product, more preferably at least 100 mg or 200 mg methylxanthine per 100g of food product; and at most 3000 mg methylxanthine per 100g of food product. In food products which have a small unit amount, such as chocolate or spread, the food product preferably contains at least 300mg, more preferably at least 500mg methylxanthine per 100g; and preferably at most 20 000 mg, more preferably at most 10 000 mg per 100g of food product.

A unit amount of a food product in the context of the present invention may be packed and sold as a single portion. For example, ice cream may be packed as individual units, making such an individual portion a unit amount in the context of the present invention. The actual weight or volume of such an individually packed product may be higher or lower than indicated above for a standard serving size. For example probiotic dairy drinks are consumed from small bottles, individually packed, having a volume of about 100 mL.

The food product may be dried and contain less than 40% water by weight of the composition, preferably less than 25%, more preferably from 1 to 15%. Alternatively, the food may be substantially aqueous and contain at least 40% water by weight of the composition, preferably at least 50%, more preferably from 65 to 99.9%.

The food preferably comprises one or more nutrients which may include carbohydrates (including sugars and/or starches), proteins, fats, vitamins, minerals, phytonutrients (including terpenes, phenolic compounds, organosulfides or a mixture thereof) or mixtures thereof. The food may be low calorie (e.g. have an energy content of less than 100 kCal per 100 g of the composition) or may have a high calorie content (e.g. have an energy content of more than 100 kCal per 100 g of the composition, preferably between 150 and 1000 kCal). The food may also contain salt, flavours, colours, preservatives, antioxidants, non-nutritive sweeteners or a mixture thereof.

It is also envisaged that a food product according to the invention may comprise a chocolate composition that may be employed as a filling, ingredient and/or coating for a confectionery product. For example, the chocolate may be used to coat ice confections (such as ice cream, sorbets, water ices and the like) and/or the chocolate may be dispersed within an ice confection.

### Method for production

The present invention also provides methods for the production of food products that have been enriched with one or more methylxanthines. The invention provides a method for enriching a food product with one or more methylxanthines, comprising the steps:
a) dissolving one or more methylxanthines in an aqueous medium, e.g. water; the temperature at which this occurs is not critical, usually this step is carried out at a temperature between 0°C and 99°C, for example at room temperature; preferably the concentration of the one or more methylxanthines is at least 0.5 gram per litre, up to the maximum concentration at which the one or more methylxanthines are still soluble;
b) dissolving a polymeric polyphenol compound having a molecular weight equal to or above 500 gram per mole in an aqueous medium, e.g. water, at a pH between 2 and 7; more preferably the pH is between 2.5 and 5.5, mostly preferred between 3 and 5; the temperature at which this occurs is not critical, usually this step is carried at a temperature between 0°C and 99°C, for example at room temperature; preferably the concentration of the polymeric polyphenol compound is at least 0.5 gram per litre, up to the concentration at which the polymeric polyphenol compound is still soluble;
c) mixing the products from steps a and b, to form a precipitate; preferably at a temperature above 50°C, usually the temperature in this step is between 50 and 80°C; suitably in this step a complex is formed between one or more methylxanthines and the polymeric polyphenol compound, usually leading to the formation of a residue that precipitates; the complex may also be formed upon cooling to room temperature;
d) adding the product from step c to a food product; to enrich the food product with one or more of the methylxanthines
   wherein the food product is a cereal bar, chocolate bar, cookie, condiment, confectionery, desert, snack, spread, ice cream, dressing, mayonnaise, sauce, bakery product, shortening or cheese.

The aqueous medium may be water. Alternatively, the aqueous medium may be an acid such as hydrochloric acid, acetic acid, propionic acid, fumaric acid, lactic acid, citric acid, malic acid, tartaric acid or phosphoric acid. Alternatively in step a, it may be a base, for example sodium hydroxide, potassium hydroxide, calcium hydroxide, sodium carbonate, magnesium carbonate, potassium carbonate, calcium carbonate, sodium phosphate, or potassium phosphate. Preferably, when the methylxanthine (for example theobromine) is not very soluble in water, then it is dissolved in an aqueous medium at a relatively low or relatively high pH, for example at pH 2 or 13.

In step a the one or more methylxanthines may be also be added as constituent of a natural extract, that is dispersed or dissolved in water.

Preferably the methylxanthine is chosen from one or more of the group consisting of caffeine, theobromine, theophylline, paraxanthine, and isocaffeine. The polymeric polyphenol compound preferably has a molecular weight above 1000 gram per mole, and more preferably the polymeric polyphenol compound comprises tannic acid.

Preferably the weight ratio of the polymeric polyphenol compound added in step b to the one or more methylxanthines added in step a is from 10:1 to 1:10, more preferably from 3:1 to 1:3 gram.

Preferably the solid product from step c is concentrated prior to carrying out further process steps. Suitably this concentration step is carried out by separating concentrated complex material formed from remaining liquid; for example by decanting, centrifugation, or filtration, or any other suitable method.

In a preferred method, the product from step c is dried prior to being added to a food product in step d. This optional drying step can be carried out by any suitable means, for example by freeze drying, spray drying, drying to air, or any other suitable method.

The optionally dried complex of the methylxanthines and the polymeric polyphenol compounds is hydrophobic, which may lead to difficulties when dispersing the complex in aqueous food products. For example the complex may not disperse well into the food product, which may lead to the formation of sediment or lumps of the complex. Dispersion of the complex in non-aqueous food products is easier to achieve than in aqueous products, as the complex has a higher affinity for the non-aqueous environment than the aqueous environment.

In order to better disperse the complex in aqueous food products, preferably the product from step c that has been dried is mixed with a dry dispersing agent in a weight ratio from 30:1 to 1:30 before being mixed with the food product in step d. Preferably the weight ratio between the dispersing agent and the dried complex is from 10:1 to 1:10, more preferably from 5:1 to 1:5, most preferably from 3:1 to 1:3. Preferably the dispersing agent is chosen from the group of microcrystalline cellulose, table sugar, maltodextrine, and inuline, and combinations of these. However, also other dispersing agents could be used, as long as they dissolve well or disperse well in aqueous products.

By inclusion of the complexes into food products, food products can be prepared which have been enriched with one or more methylxanthines, without the bitter taste associated with the methylxanthines. A final aspect of the invention is the use of a food product according to the invention to improve the mood of the person consuming the food product. Due to the decreased bitterness, the intake of the methylxanthines will be higher as compared to the products where the methylxanthines have not been complexed, which may lead to improved mood of the consumer.

### EXAMPLES

The following non-limiting examples further illustrate the present invention.

### Example 1: Production of dry complexes of caffeine and tannic acid

A solution was made of 40 gram tannic acid (ex Sigma-Aldrich, St. Louis, MO, USA, molecular formula C₇₆H₅₂O₄₆, M_{W} = 1701.2) in 500 mL water and brought to pH 4. A solution was made of 20 gram caffeine (ex Fagron, Nieuwerkerk a/d IJssel, Netherlands) in 500 mL water. The two solutions were mixed and the pH became 4.4. The mixture was then heated to 70°C, and subsequently left to cool to room temperature. The sediment was separated and freeze dried, followed by grinding. This resulted in complex A.

A second complex B was made in a similar way, except that the pH of the tannic acid solution was brought to 5 instead of 4. After mixing with the caffeine solution, the pH became 5.3.

The product was analysed for caffeine content by Kjeldahl-nitrogen analyses. The caffeine level of the complexes A and B was 34.9% by weight and 33.4% by weight, respectively. If each tannic acid molecule (comprising five gallic acid residues) would complex 5 caffeine molecules, the theoretical caffeine content would be 36.3% by weight, showing that the stoichiometric amount (to the number of terminating gallic acid residues) of caffeine is complexed by the tannic acid.

Pinches of each of the dry caffeine/tannic acid complexes A and B were tasted in the mouth by three test persons. Whereas pure caffeine is experienced as very bitter, especially when chewing on it, the dry complex powder did not taste bitter.

As a comparative example a complex of gamma-cyclodextrin (ex Wacker Chemie AG, Munich, Germany) and caffeine (ex Fagron, Nieuwerkerk a/d IJssel, Netherlands) was prepared. 110 gram gamma-cyclodextrin was dissolved in 500 gram water while stirring at 25°C. 16.5 gram caffeine powder was added to the mixture while stirring, all at neutral pH. The mixture was heated to 50°C, and left to cool to room temperature. After filtering the residue (a precipitate of gamma-cyclodextrin and caffeine), and rinsing with water, the complex was freeze dried. The caffeine content was determined by spectrophotometry, and was determined to be 13.8% by weight of the complex. The estimated caffeine content based on equimolar precipitation would be 13.0%.

### Example 2: Tasting of caffeine/tannic acid complexes in an aqueous system

Three 20g vanilla yoghurt samples enriched in caffeine were prepared by mixing a dry powder into the yoghurt; one containing pure caffeine, one containing the caffeine/tannic acid complex A (as prepared in example 1), and one containing the caffeine/gamma-cyclodextrin complex (as prepared in example 1). Each sample contained the same amount of caffeine, i.e. 30 milligram. The caffeine amount per 200g unit amount serving of yoghurt is 300 milligram. The sample containing caffeine/tannic acid complex A comprises 560 milligram of tannic acid per unit amount serving of 200 gram of yoghurt, which corresponds to a tannic acid concentration in the product of 0.28% by weight. Two test persons tasted each sample and evaluated them on bitterness (table 3).

**Table 3**

| **type of caffeine addition** | **amount of vanilla yoghurt [g]** | **amount of powder [mg]** | **amount of caffeine [mg]** | **taste perception** |
|---|---|---|---|---|
| pure caffeine | 20 | 30 | 30 | clearly bitter |
| caffeine/tannic acid complex A (34.9% caffeine) | 20 | 86 | 30 | not bitter |
| caffeine/gamma-cyclodextrin complex (13.8% caffeine) | 20 | 217 | 30 | clearly bitter |

From these experiments follows that when caffeine is added pure, or in complex with gamma-cyclodextrin it is perceived as bitter. The sample containing caffeine in complex with tannic acid did not taste bitter.

### Example 3: Tasting of caffeine/tannic acid complexes in an oil continuous system

Three sunflower oil samples were enriched with caffeine by mixing dry powder into the oil (ex Albert Heijn, the Netherlands): one containing pure caffeine, one containing caffeine/tannic acid complex A (as prepared in example 1), and one containing caffeine/gamma-cyclodextrin complex (as prepared in example 1). Each sample contained the same amount of caffeine, 48 milligram. The sample containing caffeine/tannic acid complex A comprises tannic acid at a concentration in the product of 0.9% by weight. The sunflower oil is an example of a non-aqueous food product. Two test persons tasted each sample and evaluated them on bitterness (table 4).

**Table 4**

| **type of caffeine addition** | **amount of sunflower oil [g]** | **amount of complex [mg]** | **amount of caffeine [mg]** | **taste perception** |
|---|---|---|---|---|
| pure caffeine | 10 | 48 | 48 | very bitter |
| caffeine/tannic acid complex (batch A, 34.9% caffeine) | 10 | 138 | 48 | slightly bitter after taste |
| caffeine/gamma-cyclodextrin (13.8% caffeine) | 10 | 348 | 48 | very bitter |

From these experiments follows that when caffeine is added pure, or in complex with gamma-cyclodextrin it is immediately perceived as very bitter. The sample containing caffeine in complex with tannic acid did not taste bitter; it only had a slightly bitter aftertaste.

### Example 4: Tasting caffeine/tannic acid complexes in chocolate

A standard milk chocolate was prepared with the following ingredients: sucrose, cocoa butter, cocoa mass, whole milk powder, butter oil, lecithin, vanillin, polyglycerol polyricinoleate (emulsifier). The chocolate was split into four 25g samples. Three samples were enriched in caffeine by mixing a dry powder into melted chocolate: one contained 120 mg of caffeine, one contained 359 mg of the caffeine tannic acid complex B (as prepared in example 1), and one contained 870 mg of the caffeine/gamma-cyclodextrin complex (as prepared in example 1). The other sample was a control to which nothing was added.

**Table 5**

| **Added powder** | **Added mg caffeine per 25g chocolate** |
|---|---|
| **None** | **0** |
| **120 mg pure caffeine** | **120** |
| **359 mg caffeine tannic acid complex B** | **120** |
| **870 mg caffeine beta-cyclodextrin complex** | **120** |

Two separate studies were completed, each of which included plain milk chocolate, the sample with 120mg caffeine (not complexed) and one of the complexed samples. The samples were tempered to the serving temperature (-18°C) for 24 hours prior to panelling. Plain crisps, melon and sparkling water were provided as palate cleansers.

The pair-wise ranking method was selected to compare the products for bitterness perception. Twenty five trained panellists were asked to select the most bitter sample in each pair. A random presentation order was used such that each panellist evaluated all possible pairs with order randomised within pairs, between pairs and among the panellists. Data was analysed by calculating the test statistic, Friedman's T and the HSD multiple comparison value according to the method given in Meiigaard *et al.* Sensory evaluation techniques - 2^{nd} edition, CRC Press, London. Overall, results comparing across the whole sample set showed the following (at the 5% level of significance):

### Caffeine complexed with cyclodextrin:

- The plain milk chocolate was perceived to be less bitter than the other two samples.
- No significant difference in bitterness was perceived between the sample with 120mg caffeine not in a complexed form and the sample with 120mg caffeine complexed with cyclodextrin. These two samples were perceived to be more bitter than the plain milk chocolate.

### Caffeine complexed with tannic acid

- The sample with caffeine present in a non-complexed form was perceived to be more bitter than the other two samples.
- No significant difference in bitterness was perceived between the sample with 120mg caffeine complexed with tannic acid and plain milk chocolate. These two samples were perceived to be less bitter than the sample with caffeine present in a non-complexed form.

### Example 5: Dispersing a complex in an aqueous environment

When dispersing a complex in aqueous systems lumps are sometimes formed (depending on the method of dispersing and mixing). In order to improve the dispersion of the caffeine/tannic acid complex A in aqueous products, it was mixed with microcrystalline cellulose (Avicel PH-102, ex FMC BioPolymer) in a weight ratio of 1:1. This mixture of complex A and cellulose dispersed easily and very well in yoghurt.

### Example 6: Production of theobromine/tannic acid complexes

Similar to the caffeine complexes in example 1, complexes of theobromine with tannic acid were produced. The theobromine was dissolved at a concentration of 1 gram per litre at 80°C; this low concentration is chosen due to the low solubility of theobromine. Two batches of mixtures of theobromine and tannic acid solution were prepared at pH 3.6 and 4.6 respectively. Precipitates were dried and ground.

A slightly modified procedure was used to make complex formation of theobromine and tannic acid more efficient. Dissolving theobromine in 1 M NaOH enables higher concentrations and therefore higher yields of the complex. A solution was made of 44 gram tannic acid (ex Sigma-Aldrich, St. Louis, MO, USA, molecular formula C₇₆H₅₂O₄₆, M_{W} = 1701.2) in 1 L water at 70°C. Theobromine (ex Fagron, Nieuwerkerk a/d IJssel, Netherlands) was dissolved at 144 g/kg 1MNaOH. The two solutions were mixed at a tannic acid solution to theobromine solution ratio of 13:2. During mixing the pH was controlled to remain ≤7, and subsequently it was reduced to a pH value between 3 and 6. The mixture was than left to cool to room temperature. The sediment was separated and freeze dried, followed by grinding. This resulted in the desired theobromine/tannic acid complex, which was analysed for theobromine content by DUMAS nitrogen analysis. Three batches of complex were prepared at pH values of 3.1, 4.4, and 5.6 respectively, all of which had a theobromine content of 29%

A pinch of the dry theobromine/tannic acid complex was tasted in the mouth by three test persons. Whereas pure theobromine is experienced as very bitter, especially when chewing on it, the dry complex powder did not taste bitter.

### Example 7: Tasting theobromine complexes in ice cream

A standard ice cream was prepared with the following ingredients: water, sucrose, LF9 (sugar syrup), skimmed milk powder, coconut oil, locust bean gum & L100 carrageenan (stabilisers), HP60 & HP72 (emulsifiers), beta carotene and vanilla flavour. The ice cream was split into 5 samples, each of 1000g. Three samples were enriched in theobromine by adding different levels of the theobromine/tannic acid complex prepared in example 6 (at pH 5.6), together with carboxymethyl cellulose (CMC) which was added to compensate for differences in grittiness caused by adding powder, i.e. by adding CMC, all the samples were gritty. This prevents panel members from being distracted by differences in grittiness between the samples. One sample was enriched in theobromine (i.e. not in the form of a complex), at the same theobromine level as the lowest amount of complex. The other sample was a control to which only CMC was added.

**Table 6**

| **Added powder** | **mg theobromine per 69g ice cream** |
|---|---|
| **10g CMC** | **0** |
| **2.9g pure theobromine and 10g CMC** | **200** |
| **10g complex and 10g CMC** | **200** |
| **20g complex and 10g CMC** | **400** |
| **32.5g complex and 10g CMC** | **650** |

A trained sensory panel evaluated the bitterness perception of these products using the pair-wise ranking method. A random presentation order was used such that each panellist evaluated all possible pairs with order randomised within pairs among the 20 panellists. The presentation order of these pairs was randomised across the panellists in the session. For each pair the assessors were asked to select the sample that they perceived to be most bitter. Samples were tempered to -18°C for 24 hours prior to panelling. Water biscuits and sparkling water were provided as palate cleansers. The panellists were asked to consider the bitter taste of each sample for approximately 1 minute to minimise the effect of carry-over or build-up on their selection of the most bitter sample in each pair. Data was analysed by calculating the test statistic, Friedman's T and the HSD multiple comparison value as in example 4.

Overall, results comparing across the whole sample set showed the following (at the 5% level of significance):
- The ice cream without theobromine was perceived to be less bitter than the other four samples.
- The sample with 200mg theobromine present in a complexed form was perceived to be more bitter than ice cream without theobromine but less bitter than the sample with an equivalent level of non-complexed theobromine.
- The samples with 400mg and 650mg theobromine complexed with tannic acid and the sample with 200mg of non-complexed theobromine were not perceived to be significantly different in bitterness from each other. However, they were more bitter than the sample without theobromine and the sample with 200mg theobromine in a complex. Thus, by using the complex, a greater amount of theobromine can be added for the same bitterness.

### Example 8: Tasting theobromine complexes in spreads

A potassium-enriched low fat spread was produced using a standard formulation, but without colour and flavour. The spread was split into seven samples into which dry powders were mixed as follows: one with no addition, one with tannic acid (positive control 1), one with theobromine (positive control 2), one with theobromine and tannic acid (positive control 3), and three with the theobromine/tannic acid complexes prepared in Example 6 at pH 3.1, 4.4 and 5.6 respectively. The theobromine levels in the positive controls were matched with the theobromine level in the complexes, and tannic acid levels in the positive controls were matched with the tannic acid levels in the complexes.

**Table 7**

| **Sample** | **Added powder (per 20g spread)** |
|---|---|
| **1** | **None** |
| **2** | **0.5 g theobromine** |
| **3** | **1.2 g tannic acid** |
| **4** | **0.5 g theobromine and 1.2 g tannic acid** |
| **5** | **0.5 g theobromine and 1.2 g tannic acid complexed at pH 3.1** |
| **6** | **0.5 g theobromine and 1.2 g tannic acid complexed at pH 5.6** |
| **7** | **0.5 g theobromine and 1.2 g tannic acid complexed at pH 4.4** |

Eight panellists were asked to compare the products for bitterness perception, and to judge whether a sample was perceived as bitter (i.e. yes or no). Samples 2, 3 and 4 were, unanimously, perceived as bitter; samples 1, 5, 6 and 7 were perceived as neutral to slightly bitter. These results indicate that:
- The spreads with theobromine/tannic acid complexes were perceived to be less bitter than the spreads with either theobromine or tannic acid alone or in combination.
- The pH during complexation of theobromine/tannic acid did not significantly affect the bitter perception.

### Example 9: Complexation of theobromine with polyphenols measured by NMR

The complexation of theobromine with polyphenols obtained from a variety of sources was investigated by ¹H-NMR spectroscopy titration experiments. The polyphenols used were: tannic acid (Sigma-Aldrich, the Netherlands), apple polyphenols (Applephenon™ SH - AM Todd botanicals, USA), grape seed polyphenols (MegaNatural BP Grape Seed Extract - Polyphenolics, USA) and green tea polyphenols (Sunphenon 90LB Tea Polyphenols Green Tea Extract - Tai Yo Kagaku CO., LTD., Japan).

NMR experiments were carried out on a Bruker AVANCE 3 600 MHz liquid-state spectrometer equipped with a 5 mm cryoprobe and variable temperature unit system with a precision of 0.2 degrees. ¹H chemical shifts were referenced to TSP as a standard. The signal consisting of 65k points and a dwell time of 60 µs was recorded after a hard 90° pulse of duration 6 µs. The water signal was suppressed by the continuous irradiation technique. Typical experimental time per sample was 22 minutes in the conditions of a repetition time of 20 s, 32 accumulations, and 10 minutes waiting time for temperature stabilization. Experiments were performed at 27°C. The spectrum of theobromine was recorded and compared to the spectra obtained in the presence of polyphenols at different concentrations.

The chemical shift of the theobromine as a function of polyphenol concentration was determined from the proton NMR spectra (chemical shift changes are observed when theobromine binds to the polyphenol.). The data showed that theobromine formed a complex with each of the polyphenols investigated. Therefore these complexes can also be expected to deliver methylxanthines in a non-bitter or less bitter way.

## Claims

1. A food product enriched with one or more methylxanthines, comprising a total amount of from 100 to 3000 milligram of methylxanthines per unit amount of the food product,
further comprising a polymeric polyphenol compound that has a molecular weight equal to or above 500 gram per mole and which is complexed with the one or more methylxanthines,
wherein the weight ratio of the polymeric polyphenol compound to the one or more methylxanthines is from 10:1 to 1:10 wherein the food product is a cereal bar, chocolate bar, cookie, condiment, confectionery, desert, snack, spread, ice cream, dressing, mayonnaise, sauce, bakery product, shortening or cheese.

2. A food product according to claim 1, wherein the methylxanthine is chosen from one or more of the group consisting of caffeine, theobromine, theophylline, paraxanthine, and isocaffeine.

3. A food product according to claim 2, comprising caffeine in an amount from 20 to 500 milligram per unit amount of the food product.

4. A food product according to according to claim 2, comprising theobromine in an amount from 80 to 2980 milligram per unit amount of the food product.

5. A food product according to any of claims 1 to 4, comprising caffeine in an amount from 20 to 500 milligram and theobromine in an amount from 80 to 2980 milligram per unit amount of the food product.

6. A food product according to any of claims 1 to 5, wherein the polymeric polyphenol compound has a molecular weight above 1000 gram per mole.

7. A food product according to any of claims 1 to 6, wherein the polymeric polyphenol compound comprises tannic acid.

8. A food product according to any of claims 1 to 7, wherein the food product comprises chocolate, and the chocolate has been enriched with one or more methylxanthines.

9. A method for enriching a food product with one or more methylxanthines, comprising the steps:
a) dissolving one or more methylxanthines in an aqueous medium;
b) dissolving a polymeric polyphenol compound having a molecular weight equal to or above 500 gram per mole in an aqueous medium, at a pH between 2 and 7;
c) mixing the products from steps a and b, to form a precipitate;
d) adding the product from step c to a food product
wherein the food product is a cereal bar, chocolate bar, cookie, condiment, confectionery, desert, snack, spread, ice cream, dressing, mayonnaise, sauce, bakery product, shortening or cheese.

10. A method according to claim 9, wherein the polymeric polyphenol compound comprises tannic acid.

11. A method according to claim 9 or 10, wherein the product from step c is dried prior to being added to a food product in step d.

12. A method according to claim 11, wherein the product from step c that has been dried is mixed with a dry dispersing agent in a weight ratio from 30:1 to 1:30, before being mixed with the food product in step d.

13. A method according to claim 12, wherein the dispersing agents is chosen from the group of microcrystalline cellulose, table sugar, maltodextrine, and inuline, and combinations of these.

14. A method according to any of claims 9 to 13, wherein in step a, the methylxanthine is dissolved in an aqueous medium which is an acid or a base.

15. Use of a food product according to any of claims 1 to 8 to improve the mood of the person consuming the food product.

## Patentansprüche

1. Lebensmittelprodukt, das mit einem oder mehreren Methylxanthinen angereichert ist, das eine Gesamtmenge von 100 bis 3000 mg Methylxanthine pro Mengeneinheit des Lebensmittelproduktes aufweist,
das ferner eine polymere Polyphenolverbindung aufweist, die ein Molekulargewicht von 500 g/Mol oder mehr hat und die mit einem oder mehreren Methylxanthinen im Komplex gebunden ist,
wobei das Gewichtsverhältnis zwischen der polymeren Polyphenolverbindung und dem einen oder dem mehreren Methylxanthinen 10:1 bis 1:10 beträgt, wobei das Lebensmittelprodukt ein Müsliriegel, Schokoladenriegel, Keks, eine Würze, Konfekt, ein Dessert, Snack, Aufstrich, Eiscreme, Dressing, Mayonnaise, Sauce, ein Bäckereiprodukt, Backfett oder Käse ist.

2. Lebensmittelprodukt nach Anspruch 1,
wobei das Methylxanthin aus einem oder mehreren der Gruppe ausgewählt ist, die aus Koffein, Theobromin, Theophyllin, Paraxanthin und Isokoffein besteht.

3. Lebensmittelprodukt nach Anspruch 2,
das Koffein in einer Menge von 20 bis 500 mg pro Mengeneinheit des Lebensmittelproduktes aufweist.

4. Lebensmittelprodukt nach Anspruch 2,
das Theobromin in einer Menge von 80 bis 2980 mg pro Mengeneinheit des Lebensmittelproduktes aufweist.

5. Lebensmittelprodukt nach einem der Ansprüche 1 bis 4,
das Koffein in einer Menge von 20 bis 500 mg und Theobromin in einer Menge von 80 bis 2980 mg pro Mengeneinheit des Lebensmittelproduktes aufweist.

6. Lebensmittelprodukt nach einem der Ansprüche 1 bis 5,
wobei die polymere Polyphenolverbindung ein Molekulargewicht von mehr als 1000 g/Mol aufweist.

7. Lebensmittelprodukt nach einem der Ansprüche 1 bis 6,
wobei die polymere Polyphenolverbindung Gerbsäure aufweist.

8. Lebensmittelprodukt nach einem der Ansprüche 1 bis 7,
wobei das Lebensmittelprodukt Schokolade aufweist und die Schokolade mit einem oder mehreren Methylxanthinen angereichert ist.

9. Verfahren zum Anreichern eines Lebensmittelproduktes mit einem oder mehreren Methylxanthinen,
das die folgenden Schritte aufweist:
a) Auflösen von einem oder mehreren Methylxanthinen in einem wässrigen Medium;
b) Auflösen einer polymeren Polyphenolverbindung mit einem Molekulargewicht von 500 g/Mol oder mehr in einem wässrigen Medium bei einem pH-Wert von 2 bis 7;
c) Mischen der Produkte von den Schritten a) und b), um ein gefälltes Produkt zu erzeugen;
d) Zugeben des Produktes vom Schritt c) zu einem Lebensmittelprodukt, wobei das Lebensmittelprodukt ein Müsliriegel, Schokoladenriegel, Keks, eine Würze, Konfekt, ein Dessert, Snack, Aufstrich, Eiscreme, Dressing, Mayonnaise, Sauce, ein Bäckereiprodukt, Backfett oder Käse ist.

10. Verfahren nach Anspruch 9,
wobei die polymere Polyphenolverbindung Gerbsäure aufweist.

11. Verfahren nach Anspruch 9 oder 10,
wobei das Produkt vom Schritt c) getrocknet wird, bevor es im Schritt d) einem Lebensmittelprodukt zugesetzt wird.

12. Verfahren nach Anspruch 11,
wobei Produkt vom Schritt c), das getrocknet wurde, in einem Gewichtsverhältnis von 30:1 bis 1:30 mit einem trockenen Dispersionsmittel gemischt wird, bevor es im Schritt d) mit dem Lebensmittelprodukt gemischt wird.

13. Verfahren nach Anspruch 12,
wobei das Dispersionsmittel aus der Gruppe von mikrokristalliner Cellulose, Kristallzucker, Maltodextrin und Inulin und Kombinationen davon ausgewählt ist.

14. Verfahren nach einem der Ansprüche 9 bis 13,
wobei das Methylxanthin im Schritt a) in einem wässrigen Medium gelöst wird, das eine Säure oder eine Base ist.

15. Verwendung eines Lebensmittelproduktes nach einem der Ansprüche 1 bis 8, um die Stimmung der Person zu verbessern, die das Lebensmittelprodukt verzehrt.

## Revendications

1. Produit alimentaire enrichi avec une ou plusieurs méthylxanthines, comprenant une quantité totale de 100 à 3000 milligrammes de méthylxanthines par quantité unitaire du produit alimentaire,
comprenant de plus un composé de polyphénol polymère qui présente une masse moléculaire égale ou supérieure à 500 grammes par mole et qui est complexé avec la une ou plusieurs méthylxanthines,
dans lequel le rapport massique du composé de polyphénol polymère à la une ou plusieurs méthylxanthines est de 10:1 à 1:10, dans lequel le produit alimentaire est une barre de céréale, une barre de chocolat, un cookie, un condiment, une confiserie, un dessert, une collation, une pâte à tartiner, une crème glacée, un assaisonnement, une mayonnaise, une sauce, un produit de boulangerie, une matière grasse ou un fromage.

2. Produit alimentaire selon la revendication 1, dans lequel la méthylxanthine est choisie parmi un ou plusieurs du groupe constitué de la caféine, la théobromine, la théophylline, la paraxanthine, et l'isocaféine.

3. Produit alimentaire selon la revendication 2, comprenant de la caféine dans une quantité de 20 à 500 milligrammes par quantité unitaire du produit alimentaire.

4. Produit alimentaire selon la revendication 2, comprenant de la théobromine dans une quantité de 80 à 2 980 milligrammes par quantité unitaire du produit alimentaire.

5. Produit alimentaire selon l'une quelconque des revendications 1 à 4, comprenant de la caféine dans une quantité de 20 à 500 milligrammes et de la théobromine dans une quantité de 80 à 2 980 milligrammes par quantité unitaire du produit alimentaire.

6. Produit alimentaire selon l'une quelconque des revendications 1 à 5, dans lequel le composé de polyphénol polymère présente une masse moléculaire supérieure à 1 000 grammes par mole.

7. Produit alimentaire selon l'une quelconque des revendications 1 à 6, dans lequel le composé de polyphénol polymère comprend de l'acide tannique.

8. Produit alimentaire selon l'une quelconque des revendications 1 à 7, dans lequel le produit alimentaire comprend du chocolat, et le chocolat a été enrichi avec une ou plusieurs méthylxanthines.

9. Procédé d'enrichissement d'un produit alimentaire avec une ou plusieurs méthylxanthines, comprenant les étapes :
a) de dissolution d'une ou plusieurs méthylxanthines dans un milieu aqueux ;
b) de dissolution d'un composé de polyphénol polymère présentant une masse moléculaire supérieure ou égale à 500 grammes par mole dans un milieu aqueux, à un pH de 2 à 7 ;
c) de mélange des produits des étapes a et b, pour former un précipité ;
d) d'addition du produit de l'étape c à un produit alimentaire dans lequel le produit alimentaire est une barre de céréales, une barre de chocolat, un cookie, un condiment, une confiserie, un dessert, une collation, une pâte à tartiner, une crème glacée, un assaisonnement, une mayonnaise, une sauce, un produit de boulangerie, une matière grasse ou un fromage.

10. Procédé selon la revendication 9, dans lequel le composé de polyphénol polymère comprend de l'acide tannique.

11. Procédé selon la revendication 9 ou 10, dans lequel le produit de l'étape c est séché avant d'être ajouté à un produit alimentaire dans l'étape d.

12. Procédé selon la revendication 11, dans lequel le produit de l'étape c qui a été séché est mélangé avec un agent dispersant sec dans un rapport massique de 30:1 à 1:30, avant d'être mélangé avec le produit alimentaire dans l'étape d.

13. Procédé selon la revendication 12, dans lequel l'agent dispersant est choisi dans le groupe constitué de cellulose microcristalline, de sucre de table, de maltodextrine, et d'inuline, et de combinaisons de ceux-ci.

14. Procédé selon l'une quelconque des revendications 9 à 13, dans lequel dans l'étape a), la méthylxanthine est dissoute dans un milieu aqueux qui est un acide ou une base.

15. Utilisation d'un produit alimentaire selon l'une quelconque des revendications 1 à 8 pour améliorer l'humeur de la personne consommant le produit alimentaire.
